Europäisches Patentamt

**European Patent Office**

Office européen des brevets

(11) Veröffentlichungsnummer: **0 126 844**

**A2**

(12) **EUROPÄISCHE PATENTANMELDUNG**

(21) Anmeldenummer: **84101295.8**

(22) Anmeldetag: **08.02.84**

(51) Int. Cl.³: **G 01 C 9/28**

(30) Priorität: **21.04.83 DE 3314509**

(43) Veröffentlichungstag der Anmeldung:
**05.12.84 Patentblatt 84/49**

(84) Benannte Vertragsstaaten:
**AT BE CH DE FR GB IT LI LU NL SE**

(71) Anmelder: **Stabila-Messgeräte Gustav Ullrich GmbH &**
**Co.KG**
**Postfach 1340**
**D-6747 Annweiler am Trifels(DE)**

(72) Erfinder: **Leipold, Dieter**
**Bahnhofstrasse 6**
**D-6747 Annweiler am Trifels(DE)**

(74) Vertreter: **Eitle, Werner, Dipl.-Ing. et al,**
**Hoffmann, Eitle & Partner Patentanwälte Arabellastrasse**
**4**
**D-8000 München 81(DE)**

�Fifty-four ㊴ **Wasserwaage mit einem hohlkastenförmigen Wasserwaagenkörper.**

�millon Die Erfindung betrifft eine Wasserwaage mit aus einem Hohlkasten (9) gebildeten Wasserwaagenkörper, in welchem mindestens eine Libelle (1, 2) und ggf. noch zusätzlich ein Haftmagnet (3) angeordnet sind, die jeweils in einem im Wasserwaagenkörper befindlichen Aufnahmegehäuse (4, 5, 6, 7) gelagert sind. Dabei ist das Aufnahmegehäuse an einer sich parallel zur Breitseite (18) des Wasserwaagenkörpers erstreckenden Seite mit einer Öffnung zum Einsetzen der Libelle oder des Magneten versehen. Erfindungsgemäß ist bei dieser Wasserwaage der Hohlkasten (9) über im wesentlichen die gesamte Länge seiner einen Breitseite offen ausgebildet und an dieser Seite durch mindestens einen Kastendeckel zumindest im wesentlichen geschlossen. Außerdem ist mit dem Hohlkasten einstückig das in ihm befindliche, einseitig offene Aufnahmegehäuse ausgebildet, dessen Öffnung dem Kastendeckel zugewandt ist und durch diesen mindestens teilweise geschlossen ist.

EP 0 126 844 A2

FIG. 2

## Wasserwaage mit einem hohlkastenförmigen Wasserwaagenkörper

Die Erfindung betrifft eine Wasserwaage mit einem als Hohlkörper ausgebildeten Wasserwaagenkörper, in welchem mindestens eine Libelle und ggf. ein Haftmagnet angeordnet sind, die jeweils in einem im Wasserwaagenkörper befindlichen Aufnahmegehäuse gelagert sind, welches Aufnahmegehäuse an einer sich parallel zur Breitseite des Wasserwaagenkörpers erstreckenden Seite eine zum Einsetzen der Libelle oder des Magneten ausgebildete Öffnung hat, die durch einen Deckel mindestens teilweise geschlossen ist. Bei den bekannten auf dem Markt befindlichen Wasserwaagen dieser Gattung besteht der hohlkastenförmige Wasserwaagenkörper aus einem Strangprofil mit über die gesamte Profillänge gleichbleibendem Profilquerschnitt, in welches das Aufnahmegehäuse als separates Bauteil in Profillängsrichtung eingeschoben und in gewünschter Lage im Profil befestigt ist (DE-AS 23 51 194). Um die Libelle bzw. den Magneten in das Gehäuse einsetzen zu können, hat das Gehäuse an mindestens einer sich parallel zur Breitseite des Wasserwaagenkörpers erstreckenden Seite eine hierzu dienende Öffnung. Damit die Libelle bzw. der Magnet im Gehäuse auch an dieser offenen Gehäuseseite sicher festgehalten wird, muß die Öffnung nach dem Einsetzen der Libelle oder des Magneten mindestens teilweise verschlossen werden. Dies geschieht unmittelbar nach Einsetzen der Libelle oder des Magneten in das Aufnahmegehäuse mit einem gesonderten Deckel, um die Libelle bzw.

den Magneten auch an dieser offenen Gehäuseseite zu halten.

Da bei diesen bekannten Wasserwaagen die hohlen Wasserwaagenkörper aus Strangprofilen bestehen, müssen die Sichtfenster für die Libellen bzw. die Fenster für die Haftmagnete aus diesem Profil nachträglich in einem aufwendigen Verfahren ausgeschnitten werden.

Der Erfindung liegt die Aufgabe zugrunde, die Herstellung von Wasserwaagen der eingangs genannten Gattung zu vereinfachen und zwar insbesondere durch Reduzierung der Anzahl der Bauteile der Wasserwaage und weitgehender Vermeidung von Nachbearbeitungen. Dies wird erfindungsgemäß dadurch erreicht, daß der Hohlkasten über im wesentlichen die gesamte Länge seiner einen Breitseite offen ausgebildet und an dieser Seite durch mindestens einen Kastendeckel zumindest im wesentlichen geschlossen ist und daß mit dem Hohlkasten einstückig das in ihm befindliche Aufnahmegehäuse ausgebildet ist, dessen Öffnung dem Kastendeckel zugewandt ist und durch diesen mindestens teilweise geschlossen ist. Da bei der erfindungsgemäßen Ausbildung das Aufnahmegehäuse einstückig mit dem den Wasserwaagenkörper bildenden Hohlkasten ausgebildet ist, entfällt die bisher notwendige Herstellung und Montage eines selbständigen Aufnahmegehäuses. Zwar ist bei der erfindungsgemäßen Wasserwaage der Wasserwaagenkörper mit einem sich im wesentlichen über die gesamte Länge seiner Breitseite erstreckenden Kastendeckel versehen, welcher gegenüber den bekannten Wasserwaagenkörpern aus einem Stranghohlprofil ein zusätzliches Bauteil bildet. Dafür entfällt aber ein gesonderter Deckel für die teilweise Abdeckung der zum Einsetzen der Libelle bzw. des Magneten in das Aufnahmegehäuse dienenden Gehäusedeckels, da der Kastendeckel gleichzeitig die Funktion des bekannten Gehäusedeckels erfüllt. Enthält die Wasserwaage, wie dies meistens der Fall ist, nicht nur eine, sondern mehrere Libellen und ggf. noch zusätzlich einen oder mehrere Haftmagnete, bedeutet dies eine erhebliche Einsparung an Bauteilen, da bei den vorbekannten Wasserwaagen für jede Libelle und jeden Haftmagneten ein eigener Gehäusedeckel notwendig ist, die alle bei der erfindungsgemäßen Wasserwaage durch den einzigen Kastendeckel ersetzt werden können.

Eine weitere Einsparung an Bauteilen ergibt sich dadurch, daß bei der erfindungsgemäßen Wasserwaage der Hohlkasten des Wasserwaagenkörpers an seinen Stirnenden durch einstückig angeformte Stirnwände geschlossen sein kann, was bei den bekannten Wasserwaagen mit Wasserwaagenkörper aus Strangprofil nicht der Fall sein kann. Dort sind gesonderte Stirndeckel als wiederum separate Bauteile notwendig. Wenn der offene Kasten aus einem Spritz-, Preß- oder Gießprofil einstückig hergestellt wird, können dabei in seinen Wänden gleichzeitig die für die Libellen erforderlichen Sichtfenster bzw. die für die Magnete erforderlichen Öffnungen hergestellt werden, so daß es eines nachträglichen Ausscheidens dieser Öffnungen wie bei den bisher bekannten Wasserwaagen mit Wasserwaagenkörper aus Strangprofil nicht bedarf.

Der Kastendeckel kann auf einfache Weise an dem offenen Hohlkasten des Wasserwaagenkörpers, beispielsweise durch Klemm- oder Steckverbindung, durch Klebung oder Schweißung befestigt sein. Zur Versteifung des Wasserwaagenkörpers kann der offene Hohlkasten und ggf. auch der Kastendeckel quer und bzw. parallel zur Kastenlänge sich erstreckende Trennwände haben, die mit ihrem dem Deckel bzw. dem Hohlkasten zugewandten Rand in Nuten an der Innenseite des Deckels bzw. Hohlkastens eingreifen.

- 4 -

In der Zeichnung ist ein besonders vorteilhaftes Ausführungsbeispiel der erfindungsgemäßen Wasserwaage dargestellt, welches im folgenden näher beschrieben wird:

Fig. 1 zeigt eine Schrägansicht dieses Ausführungsbeispiels;

Fig. 2 ist ein Längsschnitt durch dieses Ausführungsbeispiel nach Linie II-II in Fig. 3;

Fig. 3 ist ein Längsschnitt nach Linie III-III in Fig. 2;

Fig. 4 ist ein Querschnitt durch die Wasserwaage nach Linie IV-IV in Fig. 2 und 3.

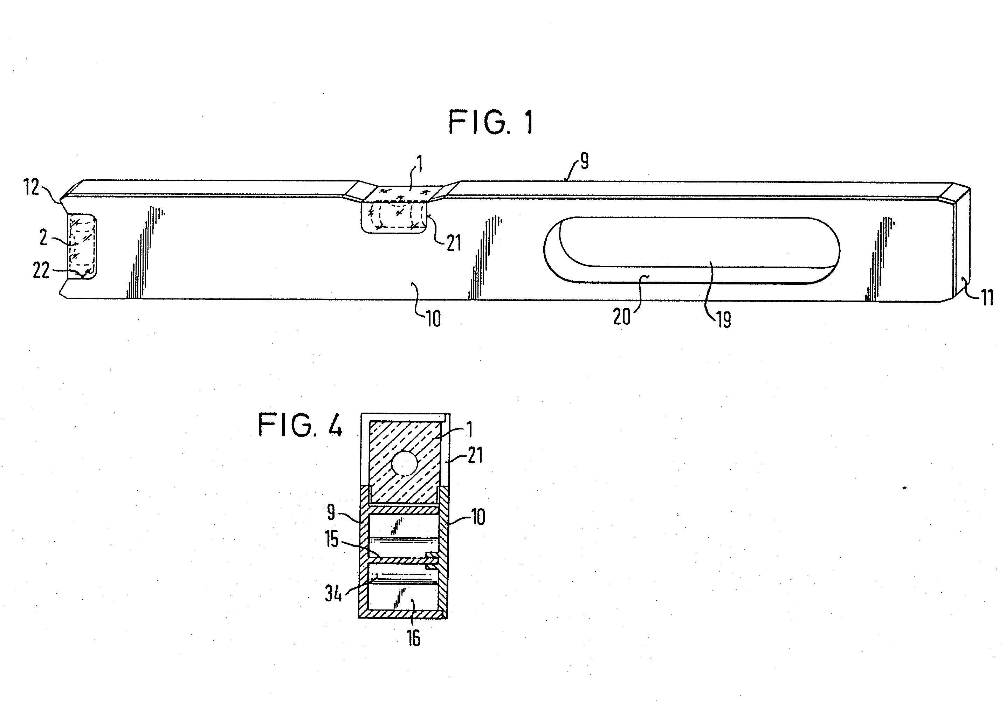

Bei dem in der Zeichnung dargestellten Ausführungsbeispiel besitzt die Wasserwaage eine Horizontallibelle 1 und eine Vertikallibelle 2 sowie einen in Fig. 1 von außen nicht sichtbaren Haftmagneten 3. Die Libellen 1, 2 und der Haftmagnet 3 sind jeweils in einem Aufnahmegehäuse 4, 5, 6 im Inneren des Wasserwaagenkörpers angeordnet. Ein weiteres Aufnahmegehäuse 7 für einen weiteren Magnet ist leer gezeigt. Der Wasserwaagenkörper besteht aus einem im Spritzverfahren einstückig hergestellten Hohlkasten 9, der über die gesamte Länge seiner einen Breitseite offen ist. Auf diese offene Seite ist ein Kastendeckel 10 aufgesetzt.

Der einseitig offene Hohlkasten ist an seinen beiden Stirnenden mit Stirnwänden 11 und 12 versehen, die einstückig an die Kastenschmalseiten 13, 14 anschließen. An den Innenseiten des Hohlkastens 9 sind quer und längs zur Hohlkastenlänge sich erstreckende Trennwände 15, 16 angeformt. Die dem Deckel zugewandten Ränder der querverlaufenden Trennwände 16 greifen in von Leisten 17 an der Innenseite des Deckels gebildete Nuten ein. Sowohl die geschlossene Breitseite 18 des Hohlkastens 9 als auch der Deckel 10 sind in einander gegenüberliegenden Bereichen mit einer Durchgriffsöffnung 19 ausgestattet. An die Durchgriffsöffnung in der Breitseite 18 des Hohlkastens schließt sich eine die Durchgriffsöffnung gegenüber dem Hohlkasteninnenraum abgrenzende Griffschale 20 an, die sich bis zum Kastendeckel erstreckt.

Anstelle von Längs- und Querwänden oder neben diesen können auch Versteifungsrippen an den Innenseiten des Hohlkastens 9 und bzw. oder des Kastendeckels 10 angeordnet sein.

Im Bereich der Aufnahmegehäuse 4, 5 für die Libellen 1, 2 sind die Hohlkastenwände an der geschlossenen Breitseite 18, der Schmalseite 13 und der Stirnseite 12 des Hohlkastens 9 sowie der Kastendeckel 10 mit Sichtfenster für die Libellen bildenden Ausschnitte 21, 22 versehen. Die Aufnahmegehäuse 4, 5 für diese beiden Libellen haben jeweils zwei Seitenwände 23, 24 und eine Bodenwand 25, die an die Breitseite 18 des Hohlkastens angeformt sind und sich bis zum gegenüberliegenden Kastendeckel 10 erstrecken, die die Gehäuse an ihrer dem Deckel zugewandten offenen Seite schließen. In ihrer Mitte ist die Bodenwand 25 mit einer hochragenden Rippe 26 versehen, auf welcher die jeweilige Libelle aufsitzt. Im übrigen hat die Libelle Spiel zu den Wänden ihres Aufnahmegehäuses, so daß sie in diesem Gehäuse zur Wasserwaagensohle entsprechend justiert werden kann.

Die Arretierung der Libelle 1, 2 in justierter Lage in ihrem Aufnahmegehäuse 4, 5 erfolgt durch in den Zwischenraum zwischen Gehäuse und Libelle eingebrachten Klebstoff. Hierzu dienen zylinderförmige Klebstofftanks 27, die an der Außenseite der Gehäuse 4, 5 angeordnet und mit deren Innenraum über Wanddurchbrüche 28 in Verbindung stehen.

In diese Klebstofftanks sind Verdrängungsstopfen 29 eingeschoben, die an der Innenseite des Kastendeckels 10 angeordnet sind. Beim Aufsetzen des Deckels auf den Hohlkasten werden diese Verdrängungsstopfen in die Klebstofftanks 27 hineingedrückt, wodurch sie den darin befindlichen Klebstoff über die Durchbrüche 28 in den Zwischenraum zwischen der jeweiligen Libelle und der Wandung ihres jeweiligen Aufnahmeraums hineindrücken. Nach Erhärten des Klebstoffes sind die Libellen in ihren Aufnahmegehäusen in genau justierter Lage gesichert.

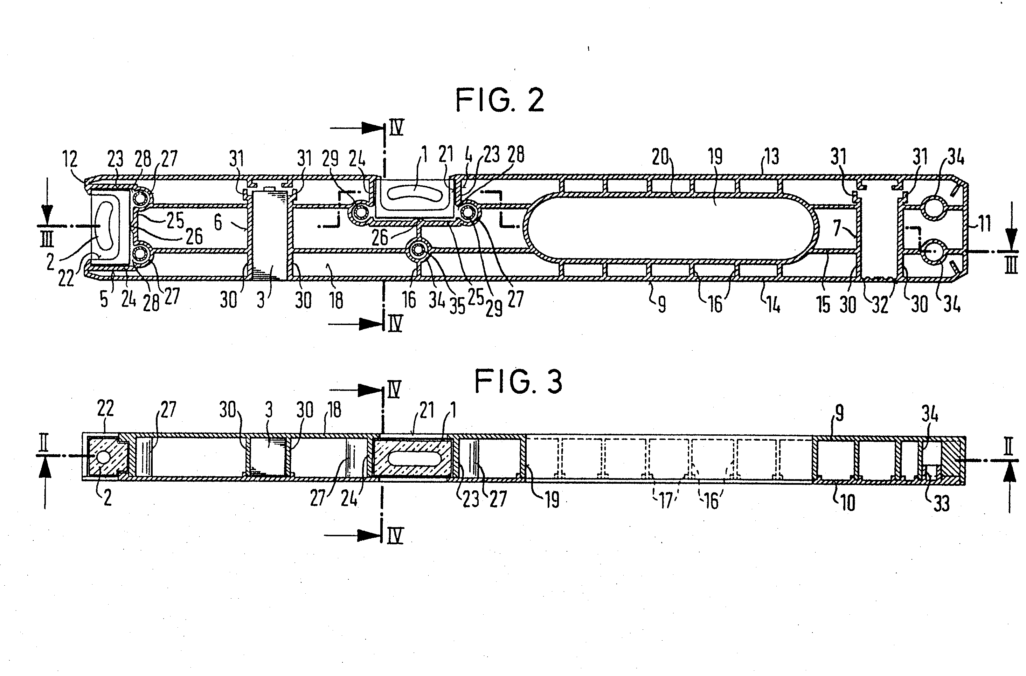

Die Gehäuse 6, 7 für die Haftmagnete 3 sind ebenfalls durch an die geschlossene Breitseite 18 des Hohlkastens angeformte, mit einem Labyrinthsystem 31 versehene Wände 30 gebildet. Das Labyrinthsystem des Gehäuses 6 ist mit Klebstoff gefüllt, mit welchem der im Gehäuse befindliche Magnet 3 festgeklebt ist. Das Gehäuse 6 ist an der die Wasserwaagensohle bildenden Schmalseite 14 des Hohlkastens 9 mit einer Durchbrechung versehen, durch welche der Haftmagnet 3 bis zur Standfläche der Wasserwaage hindurchragt. Diese Durchbrechung ist durch Herausbrechen des entsprechenden Bereichs der Hohlkörperschmalseite 14 gebildet, wozu Bruchstellen 32 an der Kastenschmalseite vorgesehen waren. Solche Bruchstellen 32 sind in Fig. 2 bei dem weiteren leer gezeigten Aufnahmegehäuse 7 gezeigt.

Zur Befestigung des Kastendeckels 10 am Hohlkasten 9 sind Steckverbindungen vorgesehen. Diese besitzen an der Deckelinnenseite angeordnete Hohlpfropfen 33, die in entsprechende Aufnahmezylinder 34 im Hohlkasten eingreifen. Die Hohlzylinder 34 können mit Klebstoff gefüllt sein, so daß gleichzeitig eine Verklebung zwischen Hohlkasten 9 und Kastendeckel 10 erfolgt. Eine solche Verklebung findet auch im Bereich der Klebstofftanks 27 an den Libellenaufnahmegehäusen 4, 5 statt. Die Befestigung des Kastendeckels 10 am Hohlkasten 9 kann auch durch Schnappverbindungen, verklebte Schnappverbindungen und bzw. oder Schweißverbindungen erreicht werden.

Sowohl der Hohlkasten 9 als auch der Kastendeckel 10 können mit allen an ihnen angeordneten Wänden, Rippen, Tanks, Stopfen oder dergleichen einstückig aus Kunststoff oder Metall im Spritz-, Preß- oder Gießverfahren hergestellt sein. Dabei können gleichzeitig die Fensterausschnitte 21, 22 gebildet werden, so daß diese nicht wie bei Wasserwaagenkörpern aus Strangprofil nachträglich in einem gesonderten Arbeitsgang hergestellt werden müssen. Die Fensterausschnitte sind so gestaltet, daß die Libellen nur an ihrem Rand von den Wänden des Hohlkastens und dem Kastendeckel halternd abgedeckt sind.

Es ist auch eine Ausführungsform der erfindungsgemäßen Wasserwaage möglich und je nach Umständen zweckmäßig, bei welcher der Hohlkasten nur über einen Teil der gesamten Länge seiner einen Breitseite offen ausgebildet und dort durch einen Deckel verschlossen ist, in welchem sich die Einbauteile, wie Libellen, Magnete, der Wasserwaage befinden.

- 8 -                    0126844

## Patentansprüche

1. Wasserwaage mit einem als Hohlkasten (9) ausgebildeten Wasserwaagenkörper, in welchem mindestens eine Libelle (1, 2) oder ein Haftmagnet (3) angeordnet ist, die bzw. der in einem im Wasserwaagenkörper befindlichen Aufnahmegehäuse (4, 5, 6, 7) gelagert ist, welches Aufnahmegehäuse an einer sich parallel zur Breitseite (18) des Wasserwaagenkörpers erstreckenden Seite eine zum Einsetzen der Libelle oder des Magneten ausgebildete Öffnung hat, die durch einen Deckel mindestens teilweise geschlossen ist, dadurch gekennzeichnet, daß der Hohlkasten (9) über im wesentlichen die gesamte Länge seiner einen Breitseite offen ausgebildet und an dieser Seite durch mindestens einen Kastendeckel (10) zumindest im wesentlichen geschlossen ist und daß mit dem Hohlkasten einstückig das in ihm befindliche Aufnahmegehäuse (4, 5, 6, 7) ausgebildet ist, dessen Öffnung dem Kastendeckel zugewandt ist und durch diesen mindestens teilweise geschlossen ist.

2. Wasserwaage nach Anspruch 1, dadurch gekennzeichnet, daß der offene Hohlkasten (9) und/oder der Deckel (10) aus einem Spritzprofil oder Gußkörper aus Kunststoff oder Metall bestehen.

3. Wasserwaage nach Anspruch 1, dadurch gekennzeichnet, daß der offene Hohlkasten (9) an mindestens einer Wand und/oder der ihn schließende Kastendeckel (10) in den Kastenhohlraum hineinragende Versteifungsrippen haben.

4. Wasserwaage nach Anspruch 1, dadurch gekennzeichnet, daß der offene Hohlkasten (9) und/oder der Kastendeckel (10) an seiner Innenseite sich quer und/oder parallel zur Kastenlänge erstreckende Trennwände (15, 16) hat, die mit ihrem dem Deckel bzw. Hohlkasten zugewandten Rand in Nuten an der Innenseite dieses Deckels oder Kastens eingreifen.

5. Wasserwaage nach Anspruch 1, dadurch gekennzeichnet, daß der Kastendeckel (10) an dem offenen Hohlkasten (9) durch Klemm- oder Steckverbindung befestigt ist.

6. Wasserwaage nach Anspruch 1, dadurch gekennzeichnet, daß der Kastendeckel (10) an dem offenen Hohlkasten (9) festgeklebt oder festgeschweißt ist.

7. Wasserwaage nach Anspruch 1, dadurch gekennzeichnet, daß der offene Hohlkasten (9) an seinen Stirnenden mit ihm einstückig ausgebildete Kastenstirnwände (11, 12) hat.

8. Wasserwaage nach Anspruch 1, dadurch gekennzeichnet, daß der offene Hohlkasten (9) an seinen Stirnenden ebenfalls offen ausgebildet und durch dort angesetzte Stirndeckel geschlossen ist.

9. Wasserwaage nach Anspruch 1, dadurch gekennzeichnet, daß die Libelle (1, 2) bzw. der Magnet (3) im Aufnahmegehäuse (4, 5, 6) festgeklebt ist.

10. Wasserwaage nach Anspruch 9, dadurch gekennzeichnet, daß im offenen Hohlkasten (9) mindestens ein mit Klebstoff gefüllter Klebstofftank (27) angeordnet ist, der in den Innenraum des im Hohlkasten ausgebildeten Aufnahmegehäuses (9) einmündet bzw. mit diesem Innenraum in Verbindung steht, in welchen Klebstofftank ein an der Innenseite des Kastendeckels (10) angeordneter Verdrängungsstopfen (29) hineinragt.

11. Wasserwaage nach Anspruch 1, dadurch gekennzeichnet, daß der offene Hohlkasten (9) an seiner geschlossenen Breitseite (18) und der diesen Hohlkasten an der gegenüberliegenden Breitseite schließende Kastendeckel (10) an einander gegenüberliegenden Stellen je eine Durchgriffsöffnung (19) haben, wobei an die Durchgriffsöffnung des Hohlkastens eine sich bis zum Deckel erstreckende Griffschale (20) angeformt ist.

12. Wasserwaage nach Anspruch 1, dadurch gekennzeichnet, daß das Aufnahmegehäuse (4, 5, 6, 7) mit Ausnahme seiner zum Einsetzen der Libelle (1, 2) oder Magnets (3) dienenden offenen Seite allseitig die Libelle oder den Magnet mindestens teilweise umgibt.

13. Wasserwaage nach Anspruch 1, dadurch gekennzeichnet, daß die die Stellsohle bildende Bodenwand (14) des Hohlkastens (9) im Bereich des Aufnahmegehäuses (6, 7) für den Haftmagneten (3) Sollbruchstellen (32) zum Herausbrechen eines im Bereich dieses Gehäuses befindlichen Teils der Bodenwand angeordnet sind.

# FIG. 1

# FIG. 4

# FIG. 2

# FIG. 3